# EUROPEAN PATENT APPLICATION

(11) **EP 1 306 703 A1**
(43) Date of publication of application: **02.05.2003**
(21) Application number: 01204034.1
(22) Date of filing: 23.10.2001
(51) Int. Cl.: G02B 6/30, G02B 6/42, G02F 1/225

(54) **Optical devices for communication**

(71) Applicant: Corning O.T.I. S.p.A., 20126 Milano (IT)
(72) Inventor: Obetti, Gloria, 35012 Camposampiero (PD) (IT); Milanese, Paolo, 27020 Olevano Di Lomellina (PV) (IT); Marazzi, Marco, 27100 Pavia (IT)
(74) Representative: Poole, Michael John

(57) **Abstract**

An optical device comprises an optical chip contained in a package formed at least in part of an enclosure wall; the chip provides an optical signal output and an optical monitoring output and the device includes a photodetector responsive to the optical monitor output

The photodetector is located at and physically supported by the enclosure wall and connected to the chip by an optical fibre and in addition
(a) an end portion of the said optical fibre adjacent to the photodetector is secured and aligned by a bore closely surrounding it; and/or
(b) an end portion of the optical fibre adjacent to the chip and an end portion of a further optical fibre receiving the output of the chip are spaced, aligned and secured together by a preformed body separate from but secured to the chip; and/or
(c) the optical fibre is a multimode fibre.

## Description

This invention relates to optical devices for use in digital communication systems (networks, in the broadest sense of the word). Its primary application is expected to be in optical modulators and it will be described mainly in that context: but it is also applicable to laser sources, optical attenuators, some optical switches, or more generally to any optical device where there is a need to monitor the amplitude (or just the presence) of an optical signal, with or without reference to its data content.

An important class of optical modulator is based on a Mach-Zehnder interferometer implemented in waveguides, typically formed on a lithium niobate chip. Phase-coherent light is transmitted through waveguides of different length and recombined to produce interference that imposes harmonic distortion to applied signals. It is inherent in the interference process that the transfer function of the device is a sine function and efficient operation requires biasing to the "half-power point" where the sine function is both steepest (maximising output signal) and most nearly linear (minimising second- and higher-order harmonic generation).

Biasing is ordinarily obtained by imposing an electrical field, which is liable to drift owing to changes in environmental conditions (such as temperature, humidity or stress) and to possible accumulation of electrostatic charges, and it is known that it is advantageous to counter such effects by monitoring the optical output of the modulator and adjusting the bias voltage to maintain its amplitude at a maximum: electronic circuits for effecting such adjustments ("automatic bias control") are known and readily available.

To provide input to a bias control circuit, a part of the optical output of the modulator must be applied to a photodetector, usually in the form of a photodiode, to obtain an electrical signal. It may be a minor part obtained by use of an unequal optical splitter (say 95:5 or even 99:1) or, where applicable, by trapping leakage or "radiation" light escaping from an appropriate part of the waveguide. Alternatively, some types of modulator are capable, without energy penalty, of outputting to a secondary output port a signal that is the inverse of the signal sent to the principal output port.

The photodetector may be located on the modulator chip, but this requires (a) a dedicated chip design for each photodetector, which is likely to be larger than a chip simply providing a monitor output and for both reasons more expensive, and (b) specific precautions for ensuring accurate positioning and alignment of the photodetector on the chip.

US-A-5953466 discloses (as "related" and it seems previously known art, with reference to figures 28-30) a modulator of this kind in which a photodiode is located in a position that is not defined, but is clearly off the modulator chip, and is connected to the chip by an optical fibre. The present invention provides major improvements to modulators (and other devices) according to this teaching.

The reference thus discloses an optical device comprising an optical chip contained in a package formed at least in part of an enclosure wall, the chip providing an optical signal output and an optical monitoring output and the device including a photodetector responsive to the optical monitor output, spaced from the optical chip and connected to it by an optical fibre.

In accordance with the invention, such an optical device (especially an optical modulator) is *characterised in that* the photodetector is located at and physically supported by the enclosure wall *and in that at least one of*
(a) an end portion of the said optical fibre adjacent to the photodetector is secured and aligned by a bore closely surrounding it;
(b) an end portion of the said optical fibre adjacent to the chip and an end portion of a further optical fibre receiving the output of the chip are spaced, aligned and secured together by a preformed body separate from but secured to the chip; and
(c) the said optical fibre is a multimode fibre.

Preferably at least two and more especially all three of (a), (b) and (c) are satisfied.

By mounting the photodetector to the enclosure wall, the need to adapt the chip design to the photodetector or to provide a separate support member is eliminated and it may be possible to find a position in which the photodetector can be accommodated in what would otherwise be wasted space without enlargement of the enclosure. It will often be convenient to locate it adjacent to the place where the other optical fibre receiving the output of the device exits the enclosure. This may, for instance, be on the end (the face of smallest dimensions) of a generally rectangular enclosure. Depending on the design of the photodetector, it may be a satisfactory alternative to mount it on a side-wall of the enclosure; in some such cases it may be preferable to use a reflector to couple the said optical fibre to the photodetector.

The bore in which the end part of the said optical fibre adjacent to the photodetector is located may be a bore directly formed in the photodetector itself or its packaging, or it may be a bore in a ferrule of glass, ceramic, metal or other suitable material cemented, soldered or otherwise attached to the photodetector or to its packaging. By use of a closely-fitting bore of adequate length, a sufficient degree of alignment of the fibre with the photodetector can be assured without requiring complex alignment apparatus or processes, and a useful degree of tolerance is obtained in the position of the photodetector in the longitudinal direction of the said optical fibre.

Where a separate ferrule is used, it may be shaped to provide a seating for engaging the photodetector in a predetermined position, and/or may be wholly or partly metallised or coated with an appropriate non-metallic material to facilitate bonding to the photodetector or to one of its leads.

The preformed body that spaces, aligns and secures the ends of the two fibres adjacent the optical chip is preferably a dual fibre block, by which is meant a block having appropriately spaced and dimensioned grooves for the respective optical fibres and a lid by which the fibres may be trapped in predetermined positions in the grooves, an adhesive normally being used to bond block, lid and fibres together. Once the fibres are secured in place in the grooves, the block may be aligned with and bonded to the chip of the device, say by use of an optically transparent UV-curable adhesive. Alternatively, it might be a ferrule (of glass, ceramic or suitable metal) with dual bores.

The block (or at least its lid) or the ferrule, as the case may be, is preferably at least in part transparent to facilitate observation and alignment when being bonded to the chip. Preferred materials include optical glasses, quartz, silicon and (for perfect matching of thermal expansion coefficients) the material of the chip (usually lithium niobate).

The ends of the fibres are preferably polished after they have been secured in the block or ferrule, as the case may be, and before bonding to the chip: they may be polished to an inclined face (that is, a face that is not perpendicular to the fibre axis) if thought desirable to eliminate or minimise back-reflection.

Use of a multimode fibre as proposed both reduces the precision with which the fibre must be aligned to the chip and the photodetector and enables a rather larger proportion of the monitor output of the chip to be collected and delivered to the photodetector.

The invention will be further described, by way of example, with reference to the accompanying drawings in which:
Figure 1 is an isometric sketch of components of a device in accordance with the invention, not yet fully assembled;
Figure 2 is a similar sketch of an alternative device in accordance with the invention;
Figure 3 is a sketch showing a different selection of components of the device of Figure 1;
Figure 4 is a detail showing a modification to the device of Figure 3;
Figure 5 is a diagrammatic longitudinal section of the complete device of Figures 1 and 3;
Figure 6 is similar to figure 5 but illustrates another modification;
Figures 7 and 8 are mutually perpendicular views of one design of photodetector that may be used in the devices of Figures 1-6, Figure 7 showing a ferrule and fibre end associated with it; and
Figures 9 and 10 are views, corresponding to Figure 6, of alternative designs of photodetector.

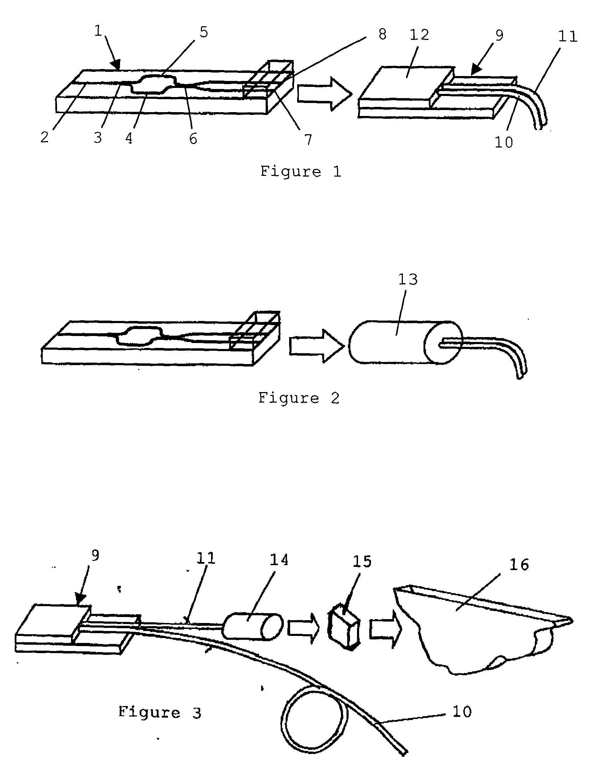

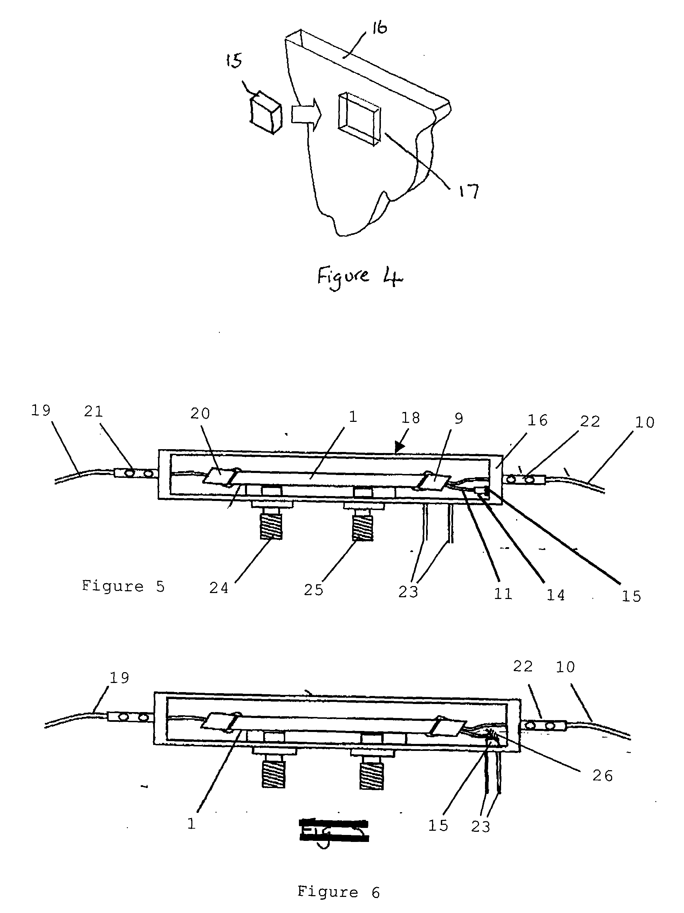

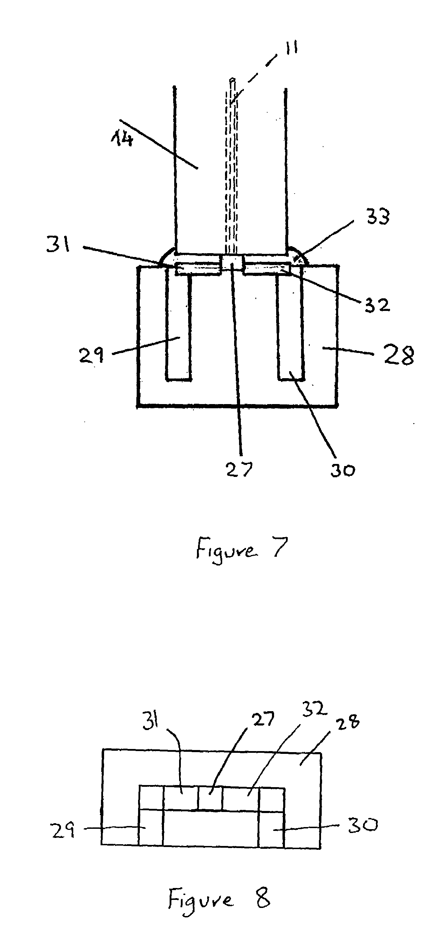

Figure 1 may be considered as showing an early stage in the assembly of a device in accordance with the invention; only the steps that relate to the invention will be described. An optical chip 1, shown for purpose of illustration as a Mach-Zehnder interferometer modulator chip having an input waveguide 2, splitter section 3, parallel waveguide sections 4 and 5, a recombination/interference/unequal splitter section 6 and two output ports 7 and 8, is aligned with and bonded to a dual fibre block 9 having parallel grooves (not visible as such) in which the ends of two optical fibres 10 and 11 have been inserted and secured with a lid 12 and suitable transparent adhesive. The spacing of the grooves is such that the fibres are spaced by the same distance as the ports 7 and 8. Block and lid are both made of optical glass so that the fibres within it are clearly visible. Prior to assembly, the end faces of the fibres are prepared and polished (at an angle of about 8 or 9° to the fibre axes) in the usual way. The chip 1 and fibre block 2 are then aligned using optical microscopy and bonded together with a UV-cured optically clear adhesive. Fibre 10 is to be the output fibre, and will usually be a single-mode fibre; fibre 11 is to be a monitor fibre and is preferably a multimode fibre because its larger diameter makes it easier to couple the maximum amount of light from the port and increases tolerance to imperfection of angular alignment: as only the amplitude of the monitor signal is of interest, mode mixing would be immaterial.

Although the block 9 has been described as a "dual" fibre block, it is to be understood that it may accommodate more than two fibres if the nature or the design of the chip 1 makes it appropriate.

Figure 2 illustrates the alternative of using a ferrule 13 with a bore for each fibre instead of the grooved fibre block 9 and lid 12.

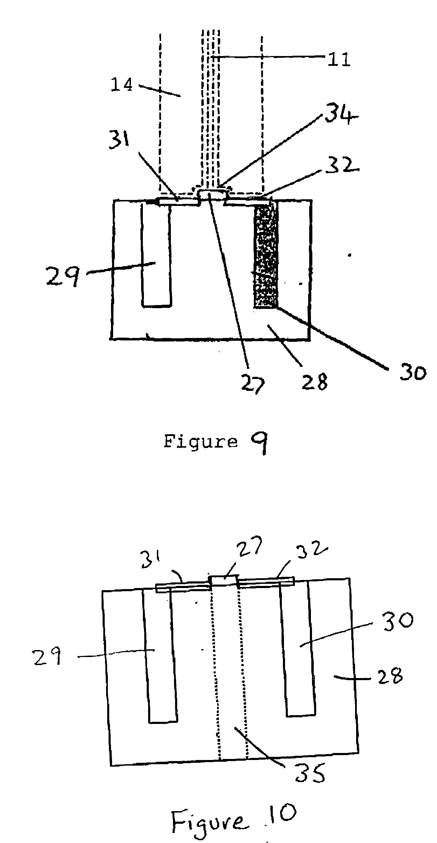

Figure 3 illustrates the next few assembly steps in which the monitor fibre 11, already attached to the block 9 (or the ferrule 13, as the case may be) and through it to the chip 1 (not shown in this figure), is trimmed to a short length, fitted with a ferrule 14 and coupled with a photodetector 15 mounted on a wall 16 of the enclosure 17 (figure 4) for the device. The ferrule 13 is preferably of glass, and the fibre is secured in it with adhesive and prepared and polished in the usual way.

Photodetector 15 and wall 16 are shown in a diagrammatic and generalised way, since their shapes and other details may vary widely. For example, the ferrule 14 may be formed with a recess that receives an end of the photodetector, or a spigot or other extension on its end, to facilitate positioning and alignment: or the arrangement may be reversed with the recess in the photodetector and a corresponding shape on the ferrule. Further contiguous surfaces on the ferrule and/or the photodetector may be coated with an appropriate primer material to facilitate bonding. In particular, a metallic coating (of copper, tin, zinc or nickel, for example) may be applied to an external surface of the ferrule to facilitate bonding by soldering either to a metallised area on the photodetector or, usually better, to one of its leads. The wall 16 may also be provided with a recess (17, Figure 4), through-hole(s) or other formations for engaging the photodetector and holding it in a predetermined position.

Figure 5 shows the whole of the completed device 18 including, in addition to the parts already described, an input optical fibre 19 connected to the chip 1 by a fibre block (or a ferrule) 20, resilient guards 21, 22 to protect the fibres 10 and 19 from unacceptable bending where they pass through the wall of the enclosure, connecting pins 23 for the photodetector 15 (internal connections from these pins to the photodetector are not shown to avoid confusion), and conventional signal and bias connectors 24 and 25 respectively, which also serve as mechanical supports.

In the device of Figure 5, the photodetector is shown in place on the end wall of a generally rectangular enclosure, which will often be its preferred position. Figure 6 shows an alternative in which the photodetector is mounted instead on a sidewall of the enclosure, which may in some cases simplify its electrical connections. It has been assumed that the design of the photodetector requires the input light to enter in the direction that is vertically downwards as drawn, and rather than occupy space with a fibre loop, use of a 45° reflector 26 is suggested.

Figures 7 and 8 show one design of photodetector suitable for use as the photodetector 15 of Figures 3-6. It comprises a photodiode light sensor chip 27 mounted on a ceramic carrier 28 which also supports electrodes 29, 30 to which the anode and cathode respectively of the diode are connected by leads 31, 32. The ferrule 14 is aligned to the chip 27 and directly fixed to the photodetector by an optically transparent adhesive 33. The adhesive is suitably a UV-curable resin, and it is desirable for its refractive index to match the index gap between the optical fibre 11 and the photodiode chip 27.

Figure 9 shows an alternative construction in which the ferrule 14 has a recess 34 shaped and dimensioned to receive the sensor chip 27 and so ensure good relative positioning and alignment between the chip and the fibre 11.

Figure 10 shows an alternative design of photodetector, which is substantially the same as that of figures 7-9 except that a there is a through bore 35 in the ceramic carrier 28 in alignment with the sensor chip 27. This is suitably dimensioned to receive the end of the fibre 11 directly, without the use of a separate ferrule. The "top" view of this photodetector is substantially the same as Figure 8.

*Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.*

## Claims

1. An optical device comprising an optical chip contained in a package formed at least in part of an enclosure wall, the chip providing an optical signal output and an optical monitoring output and the device including a photodetector responsive to the optical monitor output, spaced from the optical chip and connected to it by an optical fibre ***characterised in that*** the photodetector is located at and physically supported by the enclosure wall *and **in that** at least one of*
(a) an end portion of the said optical fibre adjacent to the photodetector is secured and aligned by a bore closely surrounding it;
(b) an end portion of the said optical fibre adjacent to the chip and an end portion of a further optical fibre receiving the output of the chip are spaced, aligned and secured together by a preformed body separate from but secured to the chip; and
(c) the said optical fibre is a multimode fibre.

2. An optical device in accordance with claim 1 in which *both*
(a) an end portion of the said optical fibre adjacent to the photodetector is secured and aligned by a bore closely surrounding it *and*
(b) an end portion of the said optical fibre adjacent to the chip and an end portion of a further optical fibre receiving the output of the chip are spaced, aligned and secured together by a preformed body separate from but secured to the chip.

3. An optical device in accordance with claim 1 in which *both*
(a) an end portion of the said optical fibre adjacent to the photodetector is secured and aligned by a bore closely surrounding it *and*
(b) the said optical fibre is a multimode fibre.

4. An optical device in accordance with claim 1 in which *both*
(a) an end portion of the said optical fibre adjacent to the chip and an end portion of a further optical fibre receiving the output of the chip are spaced, aligned and secured together by a preformed body separate from but secured to the chip; and
(b) the said optical fibre is a multimode fibre.

5. An optical device as claimed in claim 2 in which the said optical fibre is a multimode fibre.

6. An optical device in accordance with any one of claims 2, 3 and 5 in which bore in which the end part of the said optical fibre adjacent to the photodetector is located is directly formed in the photodetector itself or its packaging.

7. An optical device in accordance with any one of claims 2, 3 and 5 in which bore in which the end part of the said optical fibre adjacent to the photodetector is located is in a ferrule attached to the photodetector or to its packaging.

8. An optical device in accordance with claim 7 in which the ferrule is shaped to provide a seating for engaging the photodetector in a predetermined position.

9. An optical device in accordance with claim 7 or claim 8 in which the ferrule is at least partly metallised or coated with an appropriate non-metallic material to facilitate bonding to the photodetector or to one of its leads.

10. An optical device in accordance with claim 2 or claim 4 in which the said preformed body is a dual fibre block.

11. An optical device in accordance with any one of claims 1-10 in which the photodetector is located adjacent to the place where the other optical fibre receiving the output of the device exits the enclosure.

12. An optical device in accordance with claim 11 in which the photodetector is located on the end of a generally rectangular enclosure.

13. An optical device in accordance with any one of claims 1-12 in which the optical chip is a modulator chip.

14. An optical device in accordance with any one of claims 1-12 in which the optical chip is a Mach-Zehnder interferometer modulator chip.
